# EUROPEAN PATENT SPECIFICATION

(11) **EP 2 981 386 B1**
(45) Date of publication and mention of the grant of the patent: **30.10.2019**
(21) Application number: 14719612.5
(22) Date of filing: 02.04.2014
(51) Int. Cl.: B23C 5/20, B23C 5/10

(54) **INDEXABLE DOUBLE-SIDED MILLING CUTTING INSERT**
INDIZIERBARER DOPPELSEITIGER FRÄSSCHNEIDEEINSATZ
INSERT D'AFFÛTAGE DE FRAISE INDEXABLE À DEUX FACES

(30) Priority: 04.04.2013 AT 1102013 U
(43) Date of publication of application: 10.02.2016
(73) Proprietor: Ceratizit Luxembourg Sàrl, 8232 Mamer (LU)
(72) Inventor: KISTER, Fabien, 57000 Metz (FR)
(74) Representative: Ciesla, Dirk
(86) International application number: PCT/EP2014/000874
(87) International publication number: WO 2014/161658

(56) References cited:
- EP-A1- 2 397 248
- WO-A1-2007/075140
- WO-A1-2009/151169
- KR-A- 20060 135 211
- US-A1- 2008 298 917
- US-A1- 2011 170 963
- US-A1- 2012 009 029
- US-A1- 2013 121 775

## Description

The present invention relates to an indexable double-sided milling cutting insert according to the preamble of claim 1 and to a milling tool adapted for receiving a plurality of such indexable double-sided milling cutting inserts.

Such a cutting insert is known from KR 2006 0135211 A.

In the field of chip-forming machining of materials by milling, in many applications milling tools are used which comprise a holder adapted to be fastened to a milling machine and provided with a plurality of insert receiving portions to which replaceable cutting inserts are mounted. In such milling tools, the holder is typically adapted to receive a specific kind of milling cutting inserts. The holder is typically made of a tough metal such as tool steel. The cutting edges which engage the material to be machined during machining are provided by the cutting inserts which are usually made of cemented carbide or cermet. Typically, each of the insert receiving portions is provided with a plurality of abutment surfaces against which the cutting insert rests and a threaded bore is provided for receiving a fastening screw for fastening the cutting insert in the insert receiving portion.

In order to enable particularly economic operation, the cutting inserts are often designed as so-called indexable cutting inserts comprising a plurality of independently useable cutting edge portions which can subsequently be brought into an active cutting position after the preceding cutting edge portion is deteriorated by wear. Typically such indexable cutting inserts comprise one or more symmetry axes about which the cutting insert can be rotated for indexing. In order to maximize the useful life of cutting inserts, it is preferable to maximize the number of independently useable cutting edge portions.

It is an object of the present invention to provide an improved milling cutting insert, in particular for milling of substantially 90 degree shoulders, which provides a relatively long main cutting edge, high stability of the milling cutting insert in a mounted state and at the same time a large number of independently useable cutting edges.

The object is solved by an indexable double-sided milling cutting insert according to claim 1. Further developments are specified in the dependent claims.

According to claim 1, the indexable double-sided milling cutting insert comprises: a top surface, a bottom surface, a through-bore coaxial to a first symmetry axis intersecting the top surface and the bottom surface, a plurality of side surfaces, a median plane extending perpendicularly to the first symmetry axis and virtually dividing the cutting insert into two halves, a first edge line at the intersection of the top surface with the plurality of side surfaces, and a second edge line at the intersection of the bottom surface with the plurality of side surfaces. Each of the first edge line and the second edge line comprise: first and second primary major corners, first and second secondary major corners, first and second minor corners, first and second main cutting edges, first and second secondary cutting edges, and first and second support edges. The top and bottom surfaces each comprise a first seat surface region extending to the first support edge and a second seat surface region extending to the second support edge, wherein - with reference to the median plane - the first and second support edges of the first edge line are located behind the second and first main cutting edges of the second edge line and the first and second support edges of the second edge line are located behind the second and first main cutting edges of the first edge line.

In the context of the present application, the terms "top surface" and "bottom surface" are used to denote surfaces of the milling cutting insert. It should be noted however that - depending on the actual orientation of the milling cutting insert - the top surface may also be situated on a lower position as compared to the top surface. Due to the realization of the milling cutting insert as a double-sided indexable milling cutting insert, an increased number of independently useable cutting edges is provided as compared to conventional single-sided indexable milling cutting inserts provided with cutting edges only at the intersection of the top surface and the side surfaces. Since the cutting insert comprises the first and second primary major corners, the first and second secondary major corners and the first and second minor corners, long main cutting edges can be realized with the main cutting edges and the secondary cutting edges arranged such that deterioration of the inactive main cutting edges and secondary cutting edges (i.e. those cutting edges which are not in an active cutting position) reliably prevented during a milling process. Since the flat first seat surface region extends to the first support edge and the flat second seat surface region extends to the second support edge, the flat first and second seat surface regions can conveniently be ground in order to provide particularly exact positioning of the cutting insert in the cutting insert receiving section of a holder of a milling tool. In this way, high stability of the milling cutting insert in a mounted state is provided for. The first seat surface region and the second seat surface region can e.g. be provided as two regions of a continuous flat seat surface or e.g. as two part surfaces of a discontinuous flat seat surface which are separated from each other, for example interrupted by a bore or a recessed portion. Preferably, the first seat surface region and the second seat surface region are located in a common plane which extends perpendicularly to the first symmetry axis.

According to a further development, the first and second seat surface regions are ground. In this case, particularly high stability of the milling cutting insert in a mounted state is achieved.

According to a further development, the first and second primary major corners are spaced from the median plane by a distance which is:
(i) larger than a distance by which the secondary major corners are spaced from the median plane and
(ii) larger than a distance by which the minor corners are spaced from the median plane.

In this case, particularly smooth cutting of 90 degree shoulders is enabled. Preferably, the primary major corners can form those sections of the first edge line and the second edge line, respectively, which comprise the largest distance to the median plane.

According to a further development, a distance between a first minor corner and a second minor corner of each edge line is less than half, preferably less than one third, of the distance between a first primary major corner and a second primary major corner of said edge line. In this case, particularly long main cutting edges can be realized.

If the first and second seat surface regions extend perpendicularly to the first symmetry axis, particularly reliable mounting of the milling cutting insert to the insert receiving portion of a holder of a milling tool is enabled. If the first and second seat surface regions extend along a common plane perpendicular to the first symmetry axis, the seat surface regions can conveniently be ground simultaneously. Preferably, the support edges extend in parallel to the median plane.

According to a further development, the cutting insert comprises two-fold rotational symmetry about the first symmetry axis. In this case, indexing of the cutting insert by rotation about the first symmetry axis is enabled. If the cutting insert comprises two-fold rotational symmetry about a second symmetry axis, the second symmetry axis extending perpendicular to the first symmetry axis, indexing of the cutting insert by rotation about said second symmetry axis is also conveniently enabled. This provides the cutting insert with a high degree of symmetry which enables a large number of independently useable cutting edges.

According to a further development, a projection of the first edge line onto the median plane is in alignment with a projection of the second edge line onto the median plane. In this case, the indexable double-sided milling cutting insert can conveniently be produced by powder metallurgy with a compacting step performed in a simple die arrangement which does not require sophisticated modification.

Preferably, the side surfaces extend substantially parallel to the first symmetry axis. In this case the indexable double-sided milling cutting insert has a cutting insert intrinsic clearance angle of 0 degrees all along its circumference which enables particularly convenient production of the indexable double-sided milling cutting insert. The term "cutting insert intrinsic" clearance angle is used to describe the clearance angle which is determined by the indexable milling cutting insert itself. It should be noted, however, that the resulting "actual" clearance angle during a milling operation is determined by the orientation in which the indexable milling cutting insert is mounted in the insert receiving portion of the holder of a milling tool.

According to a preferred realization, the cutting insert has substantially the shape of an irregular hexagon having four long sides and two short sides in top view onto the top surface.

The object is further solved by a milling tool according to claim 12 comprising a holder provided with a plurality of insert receiving portions adapted to receive the indexable double-sided milling cutting inserts described above.

According to a further development, the insert receiving portions each comprise a flat support surface adapted for abutting against the first and second seat surface regions of the milling cutting insert. In this case, particularly stable and secure mounting of the milling cutting inserts to the insert receiving portions is provided for.

According to a further development, the insert receiving portions are adapted such that active main cutting edges of the milling cutting inserts extend substantially parallel to a rotational axis of the holder. In this case, milling of substantially 90 degree shoulders is enabled.

Further advantages and developments will become apparent from the following description of an embodiment with reference to the enclosed drawings.

In the figures:
- Fig. 1:: shows a milling tool according to an embodiment provided with a plurality of indexable double-sided milling cutting inserts;
- Fig. 2:: is an enlarged perspective view of an indexable double-sided milling cutting insert placed in an insert receiving portion of the milling tool;
- Fig. 3:: is an enlarged perspective view of the insert receiving portion of the milling tool;
- Fig. 4:: is a perspective view of an indexable double-sided milling cutting insert according to an embodiment for explaining the provision of ground first and second seat surface regions;
- Fig. 5:: is a perspective view of the indexable double-sided milling cutting insert according to the embodiment;
- Fig. 6:: is a top view of the indexable double-sided milling cutting insert;
- Fig. 7:: is a side view of the indexable double-sided milling cutting insert; and
- Fig. 8:: is a further side view of the indexable double-sided milling cutting insert.

An embodiment of the milling tool will now be described with reference to the Figures.

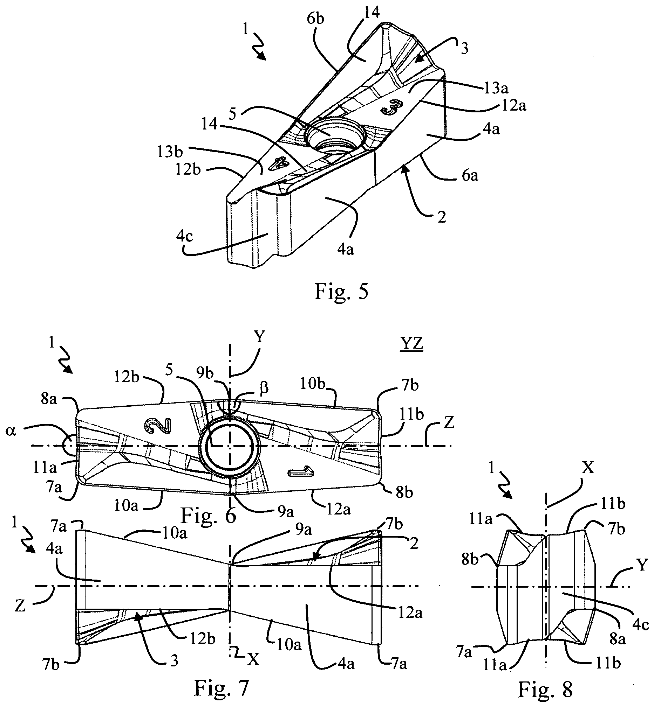

First, the indexable double-sided milling cutting insert 1 will be described with reference to Figs. 5 to 8. The indexable double-sided milling cutting insert 1 comprises a top surface 2, a bottom surface 3 and a plurality of side surfaces 4a, 4c which will be described more in detail below. In the preferred embodiment, the milling cutting insert 1 is made of cemented carbide or cermet and produced in a powder metallurgical production process.

A through-bore 5 is provided which extends completely through the milling cutting insert 1 from the top surface 2 to the bottom surface 3. The through-bore 5 is adapted for receiving a fastening screw for securely fastening the milling cutting insert 1 in an insert receiving portion of a holder of a milling tool. The through-bore 5 extends coaxially to a first symmetry axis X of the indexable double-sided milling cutting insert 1 and intersects the top surface 2 and the bottom surface 3. A second symmetry axis Y extends perpendicular to the first symmetry axis X. A third symmetry axis Z extends perpendicular to the first symmetry axis X and perpendicular to the second symmetry axis Y. The second symmetry axis Y and the third symmetry axis Z span a median plane YZ virtually dividing the indexable double-sided milling cutting insert 1 into two halves.

The indexable double-sided milling cutting insert 1 comprises 2-fold rotational symmetry about the first symmetry axis X. The milling cutting insert 1 further comprises 2-fold rotational symmetry about the second symmetry axis Y. Further, the milling cutting insert 1 comprises 2-fold rotational symmetry about the third symmetry axis Z. In this way, a high degree of symmetry is realized. It should be noted however that slight deviations from exact symmetry (e.g. for marking of different indexing position, as can be seen in Figs. 5 and 6) are possible.

A first edge line 6a is formed at the intersection of the top surface 2 with the plurality of side surfaces 4a, 4c, and a second edge line 6b is formed at the intersection of the bottom surface 3 with the plurality of side surfaces 4a, 4c. As can be seen in particular in Fig. 6, in a top view onto the top surface 2, the milling cutting insert 1 has substantially the shape of an irregular hexagon with four long sides and two short sides, as will be explained more in detail further below.

In the embodiment shown, the side surfaces 4a, 4c extend in parallel to the first symmetry axis X. Thus, a projection of the first edge line 6a onto the median plane YZ is in alignment with a projection of the second edge line 6b onto the median plane YZ. This realization enables a particularly convenient production of the double-sided milling cutting insert 1 in a powder metallurgical production process without requiring complicated design of the die used for compacting the powders used.

Since the milling cutting insert 1 comprises a high degree of symmetry as described above, the first edge line 6a is formed identical to the second edge line 6b. Thus, the features of the edge lines 6a and 6b will be described with reference to the first edge line 6a only. As can be seen in Fig. 6, in a top view, the first edge line 6a has substantially the shape of the irregular hexagon which comprises first and second primary major corners 7a, 7b, first and second secondary major corners 8a, 8b, and first and second minor corners 9a, 9b. Due to the shape which substantially resembles an irregular hexagon, the distance between the first minor corner 9a and the second minor corner 9b is much smaller than the distance between the first primary major corner 7a and the second primary major corner 7b, in the embodiment shown it is less than one third of the latter. Similarly, the distance between the first minor corner 9a and the second minor corner 9b is much smaller than the distance between the first secondary major corner 8a and the second secondary major corner 8b, in the embodiment shown it is less than one third of the latter.

Between the first primary major corner 7a and the first minor corner 9a, a first main cutting edge 10a is formed. Similarly, a second main cutting edge 10b is formed between the second primary major corner 7b and the second minor corner 9b. The first and second main cutting edges 10a, 10b form sections of the first edge line 6a.

Between the first primary major corner 7a and the first secondary major corner 8a, a first secondary cutting edge 11a is formed. Similarly, a second secondary cutting edge 11b is formed between the second primary major corner 7b and the second secondary major corner 8b. The first and second secondary cutting edges 11a, 11b also form sections of the first edge line 6a.

Between the first minor corner 9a and the second secondary major corner 8b, a first support edge 12a is formed. Similarly, a second support edge 12b is formed between the second minor corner 9b and the first secondary major corner 8a. The first and second support edges 12a, 12b also form sections of the first edge line 6a.

Thus, adjacent to each primary major corner 7a, 7b, on one side a main cutting edge 10a, 10b is formed and on the other side a secondary cutting edge 11a, 11b is formed. In operation of the milling cutting insert 1, a main cutting edge and a secondary cutting edge which are adjacent to a common primary major corner 7a or 7b are actively engaging the workpiece to be machined.

The side surfaces 4a extending adjacent to the main cutting edges 10a, 10b of the first edge line 6a are formed as flat surfaces extending to the support edges 12a, 12b of the second edge line 6b. Similarly, the side surfaces 4a extending adjacent to the support edges 12a, 12b of the first edge line 6a are formed as flat surfaces extending to the main cutting edges 10a, 10b of the second edge line 6b. Thus, the large side surfaces 4a, 4a of the milling cutting insert 1 are all formed as main clearance surfaces extending below main cutting edges, either of the first edge line 6a which is formed between the top surface 2 and the side surfaces or of the second edge line 6b which is formed between the bottom surface 3 and the side surfaces. Due to this, in use of the milling cutting insert 1 in a milling tool a support edge 12a, 12b serving as a seat for the milling cutting insert 1 is located directly behind the active main cutting edge 10b, 10a, respectively. Thus, a high stability during machining is achieved. Large side surfaces 4a which are adjacent to a common minor corner 9a or 9b enclose an angle β below 180°, preferably below 175°, on the inside of the milling cutting insert 1, as can be seen in Fig. 6.

The short side surfaces 4c extend between the secondary cutting edges 11a, 11b of the first edge line 6a and the second edge line 6b. Thus, these short side surfaces 4c form secondary clearance surfaces for the secondary cutting edges 11a, 11b. In the embodiment shown, the short side surfaces 4c are each formed by two flat surfaces which are slightly tilted such that the short side surfaces 4c have a slightly concave shape. Due to this tilted arrangement, the two flat surfaces enclose - on the outside of the milling cutting insert 1 - an angle α which is smaller than 180° in top view onto the top surface 2. Thus, the short side surfaces 4c have a shape which resembles a shallow trench extending substantially in parallel to the first symmetry axis X.

As can be seen in particular in Fig. 7, the primary major corners 7a, 7b form those parts of the edge lines 6a, 6b which have the largest distance to the median plane YZ. From the respective primary major corner 7a, 7b to the respective minor corner 9a, 9b, the main cutting edges 10a, 10b draw closer to the median plane YZ. In the embodiment, the main cutting edges 10a, 10b are formed by substantially straight lines. As can further be seen, the support edges 12a, 12b extend substantially in parallel to the median plane YZ. In the embodiment shown, the support edges 12a, 12b are also formed by substantially straight lines.

As can be seen in Fig. 8, from the respective primary major corner 7a, 7b to the respective secondary major corner 8a, 8b, the secondary cutting edges 11a, 11b first approach the median plane YZ with a small inclination on the primary major corner's side. Then, the secondary cutting edges 11a, 11b comprise a section with a large inclination in which the secondary cutting edges 11a, 11b, steeply drop to the lower level of the secondary major corners 8a and 8b, respectively.

As a result, the milling cutting insert 1 has a shape in which the primary major corners 7a, 7b are elevated in relation to the secondary major corners 8a, 8b and to the support edges 12a, 12b. In the embodiment shown, the primary major corners 7a, 7b are extremely elevated.

On the top surface 2 (and correspondingly on the bottom surface 3), adjacent to the support edges 12a, 12b first and second seat surface regions 13a, 13b are formed. The first and second seat surface regions 13a and 13b are formed in a common plane which extends perpendicularly to the first symmetry axis X. In the embodiment shown, the first and second seat surface regions 13a, 13b are formed as two part surfaces of a discontinuous flat seat surface which are separated by the through-bore 5. Adjacent to the main cutting edges 10a, 10b and adjacent to the secondary cutting edges 11a, 11b, the top surface 2 and the bottom surface 3 are formed as chip surfaces 14 provided with chip-guiding or chip-forming structures, respectively. The chip surfaces 14 slope downwards from the primary major corners 7a, 7b towards the first and second flat seat surface regions 13a, 13b. Further, the chip surfaces 14 slope downwards in a direction inwards from the main cutting edges 10a, 10b and the chip surfaces 14 slope downwards in a direction inwards from the secondary cutting edges 11a, 11b. As a consequence, the milling cutting insert 1 has a shape in which a trough extends diagonally over the top surface 2 and the bottom surface 3, respectively, from the first secondary major corner 8a to the second secondary major corner 8b, the bottom of the trough being formed by the seat surface regions 13a, 13b.

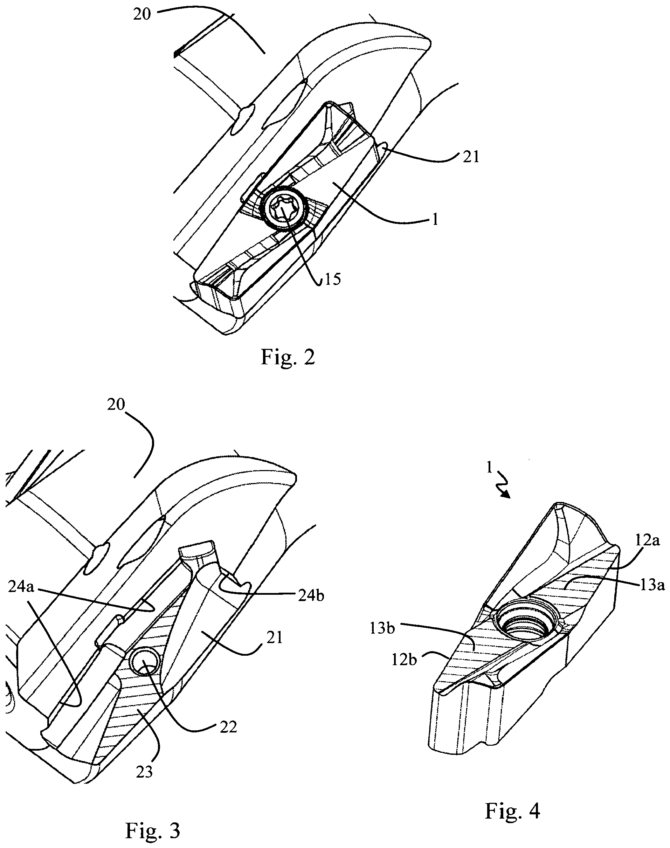

Due to this shape of the top surface 2 and of the bottom surface 3, the first and second seat surface regions 13a and 13b can conveniently be ground after production of the milling cutting insert 1 in a powder metallurgical production process in order to enable exact positioning of the milling cutting insert 1 in an insert receiving portion of a holder of a milling tool. In Fig. 4, the ground condition of the seat surface regions 13a and 13b is highlighted by hatching. Grinding in a convenient and simple manner is enabled since the seat surface regions 13a and 13b are not bordered by cutting edges at their lateral sides but freely extend to the support edges 12a and 12b, respectively.

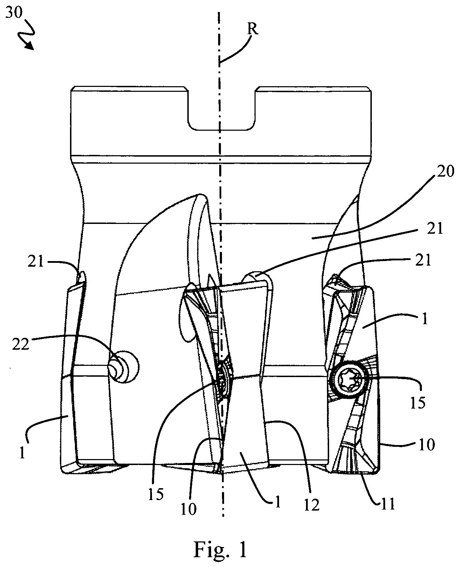

Mounting of the indexable double-sided milling cutting inserts 1 to a holder 20 of a milling tool 30 will now be described with reference to Figs. 1 to 3. In the embodiment shown, the milling tool 30 is particularly adapted for milling of substantially 90° shoulders.

As can be seen in Fig. 1, the holder 20 comprises a plurality of insert receiving portions 21 adapted for receiving the indexable double-sided milling cutting inserts 1 described above. In general, the holder 20 is adapted for receiving a plurality of identical indexable double-sided milling cutting inserts 1 with corresponding orientations and preferably at equally spaced positions around a rotational axis R of the holder 20. In the exemplary embodiment shown, the holder 20 comprises five such insert receiving portions 21. However, it should be noted that the holder 20 can also comprise more than five or less than five insert receiving portions 21.

Fig. 2 is a more detailed view of one insert receiving portion 21 of the holder 20 with an indexable double-sided milling cutting insert 1 mounted thereto. As can be seen in Figs. 1 and 2, the indexable double-sided milling cutting insert 1 is fixed in the insert receiving portion by a fixation screw 15 passed through the through-bore 5 of the milling cutting insert 1 and engaging a threaded bore 22 provided in the insert receiving portion 21 of the holder.

As can be seen in Fig. 3, the insert receiving portion 21 comprises a flat support surface 23 (highlighted by hatching in Fig. 3) adapted for abutting against the first and second seat surface regions 13a, 13b of the milling cutting insert 1. In this way, a large flat contacting region is provided in which the first and second seat surface regions 13a, 13b securely rest against the support surface 23. Further, a plurality of lateral support surfaces 24a and 24b is provided for resting against two of the long side surfaces 4a and one of the short side surfaces 4c of the indexable double-sided milling cutting insert 1, respectively. Thus, the milling cutting insert 1 is securely held in the insert receiving portion 21 by cooperation with the flat support surface 23, the lateral support surfaces 24a, 24b and the fixation screw 15.

As can be seen in Fig. 1, the indexable double-sided milling cutting inserts 1 are mounted to the holder 20 such that active main cutting edges 10 of the milling cutting inserts 1 extend substantially parallel to a rotational axis R of the holder 20. These active main cutting edges 10 protrude from the holder 20 in the radial direction. Further, the respective secondary cutting edges 11 are arranged such that they protrude from the free end of the holder 20 in the axial direction. The secondary cutting edges 11 are arranged such that they extend substantially perpendicular to the rotational axis R of the holder 20. However, the secondary cutting edges 11 do not extend exactly perpendicular to the rotational axis R but are slightly tilted instead, as can be seen in Fig. 1.

As can be seen in Fig. 1 the other main cutting edges and secondary cutting edges of the milling cutting insert 1 are arranged in a protected inactive position in which they do not engage with the workpiece to be machined. Due to the specific shape of the indexable double-sided milling cutting insert 1 which has been described above, the "inactive" main cutting edges and secondary cutting edges are arranged such that they are protected from damage while machining a workpiece with one main cutting edge and one secondary cutting edge being in an active position.

As can particularly be seen in Fig. 1, a support edge 12 of the milling cutting insert 1 is directly situated behind the active main cutting edge 10 when the milling cutting insert 1 is mounted in the holder 20. Further, this support edge 12 is safely supported by the flat support surface 23 of the insert receiving portion 21. In this way, particularly reliable and stable mounting of the indexable double-sided milling cutting inserts 1 in the holder 20 is achieved.

## Claims

1. An indexable double-sided milling cutting insert (1) comprising:
a top surface (2),
a bottom surface (3),
a through-bore (5) coaxial to a first symmetry axis (X) intersecting the top surface (2) and the bottom surface (3),
a plurality of side surfaces (4a, 4c),
a median plane (YZ) extending perpendicularly to the first symmetry axis (X) and virtually dividing the cutting insert into two halves,
a first edge line (6a) at the intersection of the top surface with the plurality of side surfaces (4a, 4c), and
a second edge line (6b) at the intersection of the bottom surface with the plurality of side surfaces (4a, 4c),
each of the first edge line (6a) and the second edge line (6b) comprising:
first and second primary major corners (7a, 7b),
first and second secondary major corners (8a, 8b),
first and second minor corners (9a, 9b),
first and second main cutting edges (10a, 10b),
first and second secondary cutting edges (11a, 11b), and
first and second support edges (12a, 12b),
wherein the top and bottom surfaces (2, 3) each comprise a first seat surface region (13a) extending to the first support edge (12a) and a second seat surface region (13b) extending to the second support edge (12b),
**characterized in that**
- with reference to the median plane (YZ)
- the first and second support edges (12a, 12b) of the first edge line (6a) are located behind the second and first main cutting edges (10b, 10a) of the second edge line (6b) and the first and second support edges (12a, 12b) of the second edge line (6b) are located behind the second and first main cutting edges (10b, 10a) of the first edge line (6a).

2. The cutting insert according to claim 1, wherein the first and second seat surface regions (13a, 13b) are ground.

3. The cutting insert according to any one of claims 1 and 2, wherein the first and second primary major corners (7a, 7b) are spaced from the median plane (YZ) by a distance which is:
larger than a distance by which the secondary major corners (8a, 8b) are spaced from the median plane (YZ) and
larger than a distance by which the minor corners (9a, 9b) are spaced from the median plane (YZ).

4. The cutting insert according to any one of the preceding claims, wherein a distance between a first minor corner (9a) and a second minor corner (9b) of each edge line (6a, 6b) is less than half, preferably less than one third, of the distance between a first primary major corner (7a) and a second primary major corner (7b) of said edge line (6a, 6b).

5. The cutting insert according to any one of the preceding claims, wherein the first and second seat surface regions (13a, 13b) extend perpendicularly to the first symmetry axis (X).

6. The cutting insert according to any one of the preceding claims, wherein the support edges (12a, 12b) extend in parallel to the median plane (YZ).

7. The cutting insert according to any one of the preceding claims, wherein the cutting insert (1) comprises two-fold rotational symmetry about the first symmetry axis (X).

8. The cutting insert according to any one of the preceding claims, wherein the cutting insert comprises two-fold rotational symmetry about a second symmetry axis (Y), the second symmetry axis (Y) extending perpendicularly to the first symmetry axis (X).

9. The cutting insert according to any one of the preceding claims, wherein a projection of the first edge line (6a) onto the median plane (YZ) is in alignment with a projection of the second edge line (6b) onto the median plane (YZ).

10. The cutting insert according to any one of the preceding claims, wherein the side surfaces (4a, 4c) extend substantially parallel to the first symmetry axis (X).

11. The cutting insert according to anyone of the preceding claims, wherein - in top view onto the top surface (2) - the cutting insert (1) has substantially the shape of an irregular hexagon having four long sides and two short sides.

12. A milling tool (30) comprising:
a holder (20) provided with a plurality of insert receiving portions (21) adapted to receive indexable double-sided milling cutting inserts (1), and
a plurality of indexable double-sided milling cutting inserts (1) according to any one of the preceding claims.

13. The milling tool according to claim 12, wherein the insert receiving portions (21) each comprise a flat support surface (23) adapted for abutting against the first and second seat surface regions (13a, 13b) of the milling cutting insert (1).

14. The milling tool according to any one of claims 12 and 13, wherein the insert receiving portions (21) are adapted such that active main cutting edges of the milling cutting inserts (1) extend substantially parallel to a rotational axis (R) of the holder (20).

## Patentansprüche

1. Indexierbarer doppelseitiger Frässchneideinsatz (1), der Folgendes umfasst:
eine obere Fläche (2),
eine untere Fläche (3),
eine Durchgangsbohrung (5), die koaxial zu einer ersten Symmetrieachse (X) verläuft und die obere Fläche (2) und die untere Fläche (3) schneidet,
eine Mehrzahl von Seitenflächen (4a, 4c),
eine Mittelebene (YZ), die senkrecht zur ersten Symmetrieachse (X) verläuft und den Schneideinsatz virtuell in zwei Hälften teilt,
eine erste Kantenlinie (6a) an der Schnittlinie der oberen Fläche mit der Mehrzahl von Seitenflächen (4a, 4c) sowie
eine zweite Kantenlinie (6b) an der Schnittlinie der unteren Fläche mit der Mehrzahl von Seitenflächen (4a, 4c),
wobei die erste Kantenlinie (6a) und die zweite Kantenlinie (6b) jeweils Folgendes umfassen:
erste und zweite primäre Hauptecken (7a, 7b),
erste und zweite sekundäre Hauptecken (8a, 8b),
erste und zweite Nebenecken (9a, 9b),
erste und zweite Hauptschneidkanten (10a, 10b),
erste und zweite sekundäre Schneidkanten (11a, 11b) sowie
erste und zweite Anlagekanten (12a, 12b),
wobei die obere und die untere Fläche (2, 3) jeweils einen ersten Sitzflächenbereich (13a), der sich bis zur ersten Anlagekante (12a) erstreckt, und einen zweiten Sitzflächenbereich (13b), der sich bis zur zweiten Anlagekante (12b) erstreckt, umfassen,
**dadurch gekennzeichnet, dass** - bezüglich der Mittelebene (YZ) - die erste und die zweite Anlagekante (12a, 12b) der ersten Kantenlinie (6a) hinter der zweiten und der ersten Hauptschneidkante (10b, 10a) der zweiten Kantenlinie (6b) angeordnet sind und die erste und die zweite Anlagekante (12a, 12b) der zweiten Kantenlinie (6b) hinter der zweiten und der ersten Hauptschneidkante (10b, 10a) der ersten Kantenlinie (6a) angeordnet sind.

2. Schneideinsatz nach Anspruch 1, wobei der erste und der zweite Sitzflächenbereich (13a, 13b) geschliffen sind.

3. Schneideinsatz nach einem der Ansprüche 1 und 2, wobei die erste und die zweite primäre Hauptecke (7a, 7b) einen Abstand zur Mittelebene (YZ) aufweisen, der
größer ist als ein Abstand der sekundären Hauptecken (8a, 8b) von der Mittelebene (YZ) und
größer ist als ein Abstand der Nebenecken (9a, 9b) von der Mittelebene (YZ).

4. Schneideinsatz nach einem der vorhergehenden Ansprüche, wobei ein Abstand zwischen einer ersten Nebenecke (9a) und einer zweiten Nebenecke (9b) jeder Kantenlinie (6a, 6b) geringer ist als die Hälfte, vorzugsweise weniger als ein Drittel, des Abstands zwischen einer ersten primären Hauptecke (7a) und einer zweiten primären Hauptecke (7b) der betreffenden Kantenlinie (6a, 6b).

5. Schneideinsatz nach einem der vorhergehenden Ansprüche, wobei sich der erste und der zweite Sitzflächenbereich (13a, 13b) senkrecht zur ersten Symmetrieachse (X) erstrecken.

6. Schneideinsatz nach einem der vorhergehenden Ansprüche, wobei die Anlagekanten (12a, 12b) parallel zur Mittelebene (YZ) verlaufen.

7. Schneideinsatz nach einem der vorhergehenden Ansprüche, wobei der Schneideinsatz (1) eine zweifache Rotationssymmetrie um die erste Symmetrieachse (X) aufweist.

8. Schneideinsatz nach einem der vorhergehenden Ansprüche, wobei der Schneideinsatz eine zweifache Rotationssymmetrie um eine zweite Symmetrieachse (Y) aufweist, wobei die zweite Symmetrieachse (Y) senkrecht zur ersten Symmetrieachse (X) verläuft.

9. Schneideinsatz nach einem der vorhergehenden Ansprüche, wobei eine Projektion der ersten Kantenlinie (6a) auf die Mittelebene (YZ) mit einer Projektion der zweiten Kantenlinie (6b) auf die Mittelebene (YZ) übereinstimmt.

10. Schneideinsatz nach einem der vorhergehenden Ansprüche, wobei sich die Seitenflächen (4a, 4c) im Wesentlichen parallel zur ersten Symmetrieachse (X) erstrecken.

11. Schneideinsatz nach einem der vorhergehenden Ansprüche, wobei der Schneideinsatz (1) - in der Draufsicht auf die obere Fläche (2) - im Wesentlichen die Form eines unregelmäßigen Sechsecks mit vier langen Seiten und zwei kurzen Seiten hat.

12. Fräswerkzeug (30), das Folgendes umfasst:
einen Halter (20), der mit einer Mehrzahl von Einsatzaufnahmeabschnitten (21) versehen ist, die zur Aufnahme von indexierbaren doppelseitigen Frässchneideinsätzen (1) ausgelegt sind, und eine Mehrzahl von indexierbaren doppelseitigen Frässchneideinsätzen (1) nach einem der vorangehenden Ansprüche.

13. Fräswerkzeug nach Anspruch 12, wobei die Einsatzaufnahmeabschnitte (21) jeweils eine ebene Auflagefläche (23) aufweisen, die so ausgelegt ist, dass sie an den ersten und den zweiten Sitzflächenbereich (13a, 13b) des Frässchneideinsatzes (1) anliegt.

14. Fräswerkzeug nach einem der Ansprüche 12 und 13, wobei die Einsatzaufnahmeabschnitte (21) so ausgelegt sind, dass aktive Hauptschneidkanten der Frässchneideinsätze (1) im Wesentlichen parallel zu einer Rotationsachse (R) des Halters (20) verlaufen.

## Revendications

1. Insert de coupe de fraisage indexable à deux faces (1) comprenant :
une surface supérieure (2),
une surface inférieure (3),
un alésage (5) coaxial à un premier axe de symétrie (X) croisant la surface supérieure (2) et la surface inférieure (3),
une pluralité de surfaces latérales (4a, 4c),
un plan médian (YZ) s'étendant perpendiculairement au premier axe de symétrie (X) et divisant virtuellement l'insert de coupe en deux moitiés,
une première ligne de bordure (6a) à l'intersection entre la surface supérieure et la pluralité de surfaces latérales (4a, 4c), et
une seconde ligne de bordure (6b) à l'intersection entre la surface inférieure et la pluralité de surfaces latérales (4a, 4c),
chacune des première ligne de bordure (6a) et seconde ligne de bordure (6b) comprenant :
des premier et second becs majeurs principaux (7a, 7b),
des premier et second becs majeurs secondaires (8a, 8b),
des premier et second becs mineurs (9a, 9b),
des premier et second bords de coupe principaux (10a, 10b),
des premier et second bords de coupe secondaires (11a, 11b), et
des premier et second bords de support (12a, 12b),
dans lequel les surfaces supérieure et inférieure (2, 3) comprennent chacune une première région de surface d'assise (13a) s'étendant jusqu'au premier bord de support (12a) et une seconde région de surface d'assise (13b) s'étendant jusqu'au second bord de support (12b),
**caractérisé en ce que**, en référence au plan médian (YZ), les premier et second bords de support (12a, 12b) de la première ligne de bordure (6a) sont situés derrière les premier et second bords de coupe principaux (10a, 10b) de la seconde ligne de bord (6b) et les premier et second bords de support (12a, 12b) de la seconde ligne de bordure (6b) sont situés derrière les second et premier bords de coupe principaux (10b, 10a) de la première ligne de bordure (6a).

2. Insert de coupe selon la revendication 1, dans lequel les première et seconde régions de surface d'assise (13a, 13b) sont le sol.

3. Insert de coupe selon l'une quelconque des revendications 1 et 2, dans lequel les premier et second becs majeurs principaux (7a, 7b) sont espacés du plan médian (YZ) d'une distance qui est :
supérieure à une distance de laquelle les becs majeurs secondaires (8a, 8b) sont espacés du plan médian (YZ), et
supérieure à une distance de laquelle les becs mineurs (9a, 9b) sont espacés du plan médian (YZ).

4. Insert de coupe selon l'une quelconque des revendications précédentes, dans lequel une distance entre un premier bec mineur (9a) et un second bec mineur (9b) de chaque ligne de bordure (6a, 6b) est inférieure à la moitié, de préférence inférieure à un tiers, de la distance entre un premier bec majeur principal (7a) et un second bec majeur principal (7b) de ladite ligne de bordure (6a, 6b).

5. Insert de coupe selon l'une quelconque des revendications précédentes, dans lequel les première et seconde régions de surface d'assise (13a, 13b) s'étendent perpendiculairement au premier axe de symétrie (X).

6. Insert de coupe selon l'une quelconque des revendications précédentes, dans lequel les bords de support (12a, 12b) s'étendent parallèlement au plan médian (YZ).

7. Insert de coupe selon l'une quelconque des revendications précédentes, l'insert de coupe (1) comprenant une symétrie de rotation double autour du premier axe de symétrie (X).

8. Insert de coupe selon l'une quelconque des revendications précédentes, l'insert de coupe comprenant une symétrie de rotation double autour d'un second axe de symétrie (Y), le second axe de symétrie (Y) s'étendant perpendiculairement au premier axe de symétrie (X).

9. Insert de coupe selon l'une quelconque des revendications précédentes, dans lequel une projection de la première ligne de bordure (6a) sur le plan médian (YZ) est alignée avec une projection de la seconde ligne de bordure (6b) sur le plan médian (YZ).

10. Insert de coupe selon l'une quelconque des revendications précédentes, dans lequel les surfaces latérales (4a, 4c) s'étendent sensiblement parallèlement au premier axe de symétrie (X).

11. Insert de coupe selon l'une quelconque des revendications précédentes, vu du dessus de la surface supérieure (2), l'insert de coupe (1) présentant sensiblement la forme d'un hexagone irrégulier comportant quatre côtés longs et deux côtés courts.

12. Fraise (30) comprenant :
un support (20) muni d'une pluralité de parties de réception d'insert (21) conçues pour recevoir des inserts de coupe de fraisage indexables à deux faces (1), et une pluralité d'inserts de coupe de fraisage indexables à deux faces (1) selon l'une quelconque des revendications précédentes.

13. Fraise selon la revendication 12, dans laquelle les parties de réception d'insert (21) comprennent chacune une surface de support plate (23) conçue pour venir en butée contre les première et seconde régions de surface d'assise (13a, 13b) de l'insert de coupe de fraisage (1).

14. Fraise selon l'une quelconque des revendications 12 et 13, dans laquelle les parties de réception d'insert (21) sont conçues de sorte que les bords de coupe principaux actifs des inserts de coupe de fraisage (1) s'étendent parallèlement à un axe de rotation (R) du support (20).
